# EUROPÄISCHE PATENTSCHRIFT

(11) **EP 3 803 125 B1**
(45) Veröffentlichungstag und Bekanntmachung des Hinweises auf die Patenterteilung: **03.08.2022**
(21) Anmeldenummer: 19733959.1
(22) Anmeldetag: 06.06.2019
(51) Int. Cl.: F04D 13/02, F04D 15/02, F04D 29/02, F04D 29/08, H02K 49/10

(54) **MAGNETGEKUPPELTE PUMPE MIT DOPPELSCHALIGEM SPALTTOPF**
MAGNETICALLY COUPLED PUMP HAVING A DOUBLE-SHELL SPLIT CAN
POMPE À UN COUPLAGE MAGNÉTIQUE POURVUE D'UNE CHEMISE D'ENTREFER DOUBLE ENVELOPPE

(30) Priorität: 07.06.2018 DE 102018113636
(43) Veröffentlichungstag der Anmeldung: 14.04.2021
(73) Patentinhaber: Klaus Union GmbH & Co. KG, 44795 Bochum (DE)
(72) Erfinder: ESCHNER, Thomas, 44797 Bochum (DE)
(74) Vertreter: Schneiders & Behrendt Bochum
(86) Internationale Anmeldenummer: PCT/EP2019/064813
(87) Internationale Veröffentlichungsnummer: WO 2019/234170

(56) Entgegenhaltungen:
- EP-A2- 0 268 013
- WO-A1-2014/005564
- WO-A1-2014/053290
- CN-A- 104 564 791
- CN-A- 105 422 500
- DE-A1- 3 542 337

## Beschreibung

Die Erfindung betrifft eine magnetgekuppelte Pumpe mit einem aufnehmenden Pumpengehäuse, einem das Pumpengehäuse verschließenden Gehäusedeckel und einem Spalttopf, der einen metallischen Innentopf und einen keramischen Außentopf, an dem ein Flansch ausgebildet ist, aufweist.

Die WO 2014/005564 A1 offenbart eine magnetgekuppelte Pumpe, welche einen Innenrotor und einen Außenrotor aufweist, die jeweils Magnete tragen. Ein doppelwandiger Spalttopf ist vorgesehen, der einen Außentopf und einen Innentopf aufweist, wobei der Innentopf aus einer Nickelbasislegierung besteht, wobei der Außentopf aus einer Titanlegierung gebildet ist.

Die EP 0 268 013 A2 offenbart eine Pumpe, deren Innentopf mit einem Gehäusedeckel verschweißt ist.

In DE 35 42 337 A1 ist ein einschaliger Topf gezeigt, der am Flansch gegen ein Gehäuseteil verspannt ist.

Aus dem Stand der Technik ist es auch bekannt, Spalttöpfe bei magnetgekuppelten Pumpen doppelschalig mit Innentopf und Außentopf auszugestalten, wenn ein hohes Maß an Sicherheit gefordert wird. Es handelt sich dabei um zwei ineinander liegende Spalttöpfe, die jeder für sich auf die Betriebsbedingungen ausgelegt sind. Bei Beschädigung eines der beiden Spalttöpfe bleibt das System dicht. Nachteilig an diesen doppelwandig ausgeführten Spalttöpfen ist, dass die Wirbelstromverluste im Betrieb verdoppelt werden. Hierdurch ist der Energieverbrauch einer entsprechend ausgestatteten magnetgekuppelten Pumpe deutlich höher. Die Erwärmung der Spalttöpfe kann zudem zum Sieden des Fördermediums führen. Außerdem wird der Außentopf nicht von dem Fördermedium durchspült und muss entsprechend gekühlt werden. Eine Kühlung des Außentopfes erfolgt in der Regel durch metallischen Kontakt zum Innentopf auf den die Wärme übertragen wird. Die keramische Ausgestaltung des Außentopfs reduziert die Erwärmung und verbessert die Energieeffizienz, da in dem keramischen Material des Außentopfs keine Wirbelstromverluste auftreten. Die verbleibende Erwärmung des metallischen Innentopfs kann durch die Kühlung mit dem geförderten Medium kontrolliert werden.

Nachteilig an den bisher bekannten doppelschaligen Spalttöpfen mit einem metallischen Innentopf und einem keramischen Außentopf ist, dass diese kompliziert aufgebaut sind und daher die Fertigung, Montage und Wartung der entsprechenden Pumpen aufwendig ist. Insbesondere die Konstruktion des doppelschaligen Spalttopfs aus unterschiedlichen Materialien ist in der Regel schwierig abzudichten, sodass die durch die doppelschalig ausgeführten Spalttöpfe erzielte erhöhte Sicherheit, durch zusätzliche Dichtflächen konterkariert wird.

Es ist daher Aufgabe der Erfindung, eine verbesserte Pumpe anzugeben, die eine einfache und sichere Konstruktion bietet und eine unkomplizierte und schnelle Fertigung, Montage und Wartung ermöglicht. Insbesondere soll eine sichere und energieeffiziente Pumpe angegeben werden, die beispielsweise auch den Standard der Norm DIN/ISO 2858 erfüllt.

Gelöst wird diese Aufgabe durch eine Pumpe mit den Merkmalen des Anspruchs 1.

Dadurch, dass erfindungsgemäß der Innentopf mit dem Gehäusedeckel verschweißt ist und der Außentopf über einen Spannring am Flansch gegen den Gehäusedeckel verspannt ist, kann eine einfache und sichere Konstruktion bei einer magnetgekuppelten Pumpe der eingangs genannten Art angegeben werden. Die Verschweißung des Innentopfs am Gehäusedeckel ermöglicht die Einsparung einer zwischen den Bauteilen sonst üblichen Dichtung. Diese Dichtung kann als mögliche Schwachstelle der Konstruktion somit entfallen und der Innentopf ist einfach und dicht über eine Schweißnaht mit dem Gehäusedeckel verbunden. Mit der Verspannung des Außentopfs gegen den Gehäusedeckel über einen Spannring am Flansch lässt sich der keramische Außentopf unkompliziert zur Bildung des doppelschaligen Spalttops am Gehäusedeckel festlegen. Die Montage der Pumpe wird insbesondere dadurch vereinfacht, dass der Gehäusedeckel mit den beiden Töpfen des Spalttopfs und dem Spannring einfach und unproblematisch zu einer Einheit vormontiert werden kann.

Vorteilhafte Ausgestaltungen und Weiterbildungen der Erfindung ergeben sich aus den abhängigen Ansprüchen. Es ist darauf hinzuweisen, dass die in den Ansprüchen einzeln aufgeführten Merkmale auch in beliebiger und technologisch sinnvoller Weise miteinander kombiniert werden können und somit weitere Ausgestaltungen der Erfindung aufzeigen.

Gemäß einer vorteilhaften Ausgestaltung der Erfindung ist vorgesehen, dass dass die Pumpe einen Treiber und einen Läufer aufweist, zwischen denen der Spalttopf angeordnet ist, wobei der Läufer über eine Pumpenlagerung im Spalttopf gelagert ist, wobei die Pumpenlagerung am Gehäusedeckel befestigt ist. Mit der Befestigung der Pumpenlagerung am Gehäusedeckel kann eine besonders kompakte Bauform der magnetgekuppelten Pumpe erreicht werden. Aufgrund der Befestigung der Pumpenlagerung an dem Gehäusedeckel, der auch die beiden Töpfe des doppelschalig ausgebildeten Spalttopfs trägt, ergibt sich gegenüber dem Stand der Technik eine sehr kurze Bauform, die sich trotz des doppelschaligen Aufbaus des Spalttopfs kaum von der Bauform einer Pumpe mit einschaligem Spalttopf unterscheidet. Dies hat den Vorteil, dass die Pumpe mit doppelschaligen Spalttopf auch beispielsweise gemäß der Norm DIN/ISO 2858 gefertigt werden kann. Somit kann die vorgeschlagene Pumpe einfach gegen herkömmliche Pumpen mit einfachem Spalttopf anschlusskompatibel ausgetauscht werden.

Besonders bevorzugt ist eine Ausführungsform, die vorsieht, dass die Pumpenlagerung über eine Schraubverbindung an dem Gehäusedeckel befestigt ist. Mit einer solchen Schraubverbindung lässt sich die Pumpenlagerung sehr einfach an dem Gehäusedeckel befestigen und für Wartungsarbeiten einfach lösen.

Eine besonders vorteilhafte Ausführung der Erfindung sieht vor, dass zwischen dem Flansch des Außentopfs und dem Gehäusedeckel eine Flachdichtung angeordnet ist. Mit der Anordnung einer Flachdichtung zwischen dem Flansch des Außentopfs und dem Gehäusedeckel kann eine zuverlässige Abdichtung erreicht werden. Die Montage der Flachdichtung ist deutlich einfacher als üblicherweise im Stand der Technik verwendete O-Ring-Dichtungen. Hierdurch wird zum einen die Fertigung und Montage der vorgeschlagenen Pumpe vereinfacht und zum anderen die Konstruktion wartungsfreundlicher. Eine Flachdichtung ist zudem preiswerter und auch für höhere Temperaturen geeignet. Es kann insbesondere eine Flachdichtung auf PTFE-Basis verwendet werden, die sich durch eine hohe Medienbeständigkeit, eine hohe Temperaturbeständigkeit, eine hohe erzielbare Dichtheit und eine gute Alterungs- und Witterungsbeständigkeit auszeichnet.

Eine vorteilhafte Ausführung sieht vor, dass der Spannring auf die Flachdichtung eine Vorspannung ausübt. Die Flachdichtung wird durch den Spannring zwischen Flansch und Gehäusedeckel, d.h. in der Flanschverbindung verspannt. Durch die Ausübung einer Vorspannung auf die Flachdichtung kann eine zuverlässige Abdichtung des Spaltes zwischen Außentopf und Gehäusedeckel durch die Flachdichtung erreicht werden. Mit der aufgebrachten Vorspannung auf die Flachdichtung kann ein Verrutschen der Dichtung zwischen den den Dichtungsspalt bildenden Bauteilen vermieden werden, was die Betriebssicherheit der Pumpe erhöht.

Eine besonders vorteilhafte Ausführung der Erfindung sieht vor, dass in dem Gehäusedeckel eine Drucküberwachungsleitung ausgebildet ist, die in einen Zwischenraum zwischen dem Innentopf und dem Außentopf führt. Über die Bildung der Drucküberwachungsleitung im Gehäusedeckel lässt sich der zwischen dem Innentopf und dem Außentopf befindliche Raum mit einer Drucküberwachung versehen. Über diese Drucküberwachung können leicht Beschädigungen an dem Spalttopf ermittelt werden. Nimmt der Druck im Zwischenraum Atmosphärendruck an, kann auf eine Beschädigung bzw. Fehlfunktion des Außentopfs geschlossen werden. Diese Beschädigung des Außentopfs kann beispielsweise bei Lagerschäden auftreten, die einen mechanischen Kontakt zwischen dem Treiber und dem Außentopf zur Folge haben. Nimmt der Druck im Zwischenraum das Niveau des im Innentopf befindlichen Fördermediums an, kann daraus geschlossen werden, dass der Innentopf durch Abrasion, Korrosion oder mechanischen Kontakt mit dem Läufer zerstört ist und sich Fördermedium im Zwischenraum befindet. Hierdurch lassen sich Fehler beim Betrieb der Pumpe sehr einfach ermitteln, um einen Austausch der beschädigten Pumpe schnell veranlassen zu können, und zwar rechtzeitig bevor das Medium aus der Pumpe in die Umgebung austritt.

Gemäß einer bevorzugten Ausgestaltung der Erfindung ist vorgesehen, dass an die Drucküberwachungsleitung ein Drucksensor zur Drucküberwachung des Zwischenraumes angeschlossen ist. Mit der Anordnung eines Drucksensors an der Drucküberwachungsleitung kann eine automatisierte Drucküberwachung des Zwischenraumes im Spalttopf realisiert werden. Hierdurch lassen sich Beschädigungen des Innentopf oder des Außentopfs sehr schnell feststellen, sodass eine Erneuerung des Spalttopfs umgehend eingeleitet werden kann. Hierdurch können Umweltschäden durch den Betrieb beschädigter Pumpen reduziert werden.

Besonders vorteilhaft ist eine Ausführungsform, die vorsieht, dass der Innentopf aus einer Nickelbasislegierung gebildet ist. Die Bildung des Innentopfs aus einer Nickelbasislegierung hat verschiedene Vorteile. Mit einer solchen Nickelbasislegierung kann eine geringe Wandstärke des Innentopfs, bei einer hohen Festigkeit, insbesondere einer hohen Härte und einer guten Korrosionsbeständigkeit realisiert werden. Vorteilhaft ist ferner, dass eine Wasserstoffversprödung bei diesem Werkstoff nicht auftritt, sodass mit einer Pumpe, die einen entsprechenden Innentopf aufweist, auch wasserstoffhaltige Medien sicher gefördert werden können.

Eine besonders vorteilhafte Ausführung der Erfindung bezieht sich darauf, dass der Außentopf aus Zirkonoxid gebildet ist. Ein Außentopf aus Zirkonoxid weist nicht nur eine verbesserte Korrosionsbeständigkeit auf, sondern auch eine hohe Druckfestigkeit. Die Wandstärke des Außentopfes kann vergleichsweise gering ausgeführt werden, so dass der Spalt zwischen Treiber und Läufer eng gehalten werden kann, was der Effizienz der Pumpe zugutekommt. Von besonderem Vorteil sind die geringen Wirbelstromverluste, bedingt durch den keramischen, d.h. elektrisch nicht leifähigen Werkstoff. Neben der mechanischen Festigkeit auch bei höheren Drücken und höheren Temperaturen ist Zirkonoxid auch sehr widerstandsfähig gegen Verschleiß.

Eine vorteilhafte Ausgestaltung sieht vor, dass zwischen dem Gehäusedeckel und dem Pumpengehäuse eine Flachdichtung angeordnet ist, wobei eine Befestigung des Gehäusedeckels an dem Pumpengehäuse auf die Flachdichtung eine Vorspannung ausübt. Mit der Anordnung der Flachdichtung zwischen dem Gehäusedeckel und dem Pumpengehäuse kann eine einfache und sichere Abdichtung der Pumpe bei Montage und Wartung sichergestellt werden. Die preiswerte Flachdichtung lässt sich besonders einfach zwischen den Pumpenteilen positionieren und durch die Vorspannung auf die Flachdichtung lässt sich eine hervorragende Dichtwirkung zuverlässig erreichen.

Die Erfindung kann sich auf eine Kreiselpumpe oder auch eine Schraubenspindelpumpe oder eine andere magnetgekuppelte Pumpe beziehen.

Weitere Merkmale, Einzelheiten und Vorteile der Erfindung ergeben sich aufgrund der nachfolgenden Beschreibung sowie anhand der Zeichnungen, die ein Ausführungsbeispiel zeigen. Einander entsprechende Gegenstände oder Elemente sind in allen Figuren mit den gleichen Bezugszeichen versehen. Es zeigen:
- Figur 1: erfindungsgemäße Pumpe in Schnittdarstellung,
- Figur 2: Ansicht des Spalttopfes,
- Figur 3: Spalttopf in Schnittdarstellung,
- Figur 4: Seitenansicht des Spalttopfes und
- Figur 5: Detailschnitt des Spalttopfes.

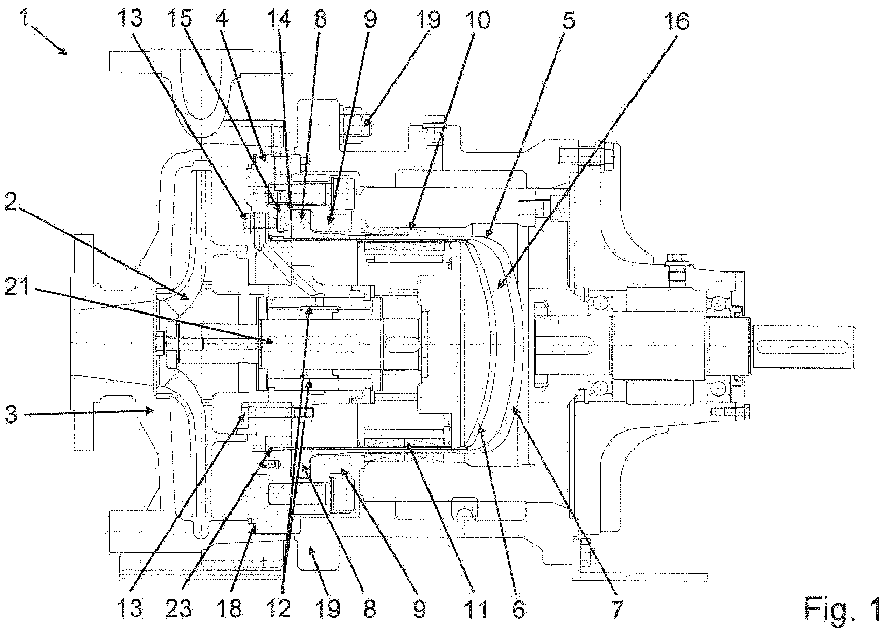

In der Figur 1 insgesamt mit dem Bezugszeichen 1 bezeichnet ist eine erfindungsgemäße Pumpe dargestellt. Die dargestellte Pumpe 1 ist als magnetgekuppelten Pumpe 1 ausgebildet. Im gezeigten Ausführungsbeispiel ist die Pumpe 1 als Kreiselpumpe ausgebildet. Die Pumpe 1 weist ein Gehäuse 3 auf, in dem ein über die Magnetkupplung 10, 11 angetriebenes Laufrad 2 aufgenommen ist. Das Pumpengehäuse 3 ist an seiner rechten Seite durch einen Gehäusedeckel 4 verschlossen, an dem ein Spalttopf 5 angeordnet ist, der zwischen dem Treiber 10 und dem Läufer 11 der Magnetkupplung 10, 11 positioniert ist. Der Spalttopf 5 weist einen metallischen Innentopf 6 und einen keramischen Außentopf 7 auf. An dem keramischen Außentopf 7 ist ein Flansch 8 ausgebildet. Über diesen Flansch 8 ist der Außentopf 7 mittels eines Spannrings 9 gegen den Gehäusedeckel 4 verspannt. Der Spannring 9 weist hierzu einen Schraubenkranz 20 auf, über welchen der Spannring 9 mit dem Gehäusedeckel 4 verschraubt ist. Der Flansch 8 am Außentopf 7 ist über die Verschraubung des Schraubkranzes 20 an dem Gehäusedeckel 4 festgelegt.

Der metallische Innentopf 6 ist mit dem Gehäusedeckel 4 verschweißt und bildet so eine Einheit mit dem Gehäusedeckel 4. Die Verschweißung ist um die Öffnung des Innentopfs 6 angelegt und befestigt so den Gehäusedeckel 4 dicht am Innentopf 6. Zwischen dem Gehäusedeckel 4 und dem Flansch 8 des Außentopfs 7 ist eine Flachdichtung 14 angeordnet, welche den Spalt zwischen Innentopf 6 und Außentopf 7 gegen den Gehäusedeckel 4 abdichtet. Hierzu übt der Spannring 9 eine Vorspannung auf die Flachdichtung 14 aus und sorgt so für eine hohe Dichtwirkung. Mit der Festlegung des Außentopfs 7 an dem Gehäusedeckel 4 über die Verspannung mit dem Spannring 9 lässt sich sehr einfach ein Spalttopf 5 realisieren, der einen metallischen Innentopf 6 aufweist und einen darüber gestülpten Außentopf 7 aus keramischen Material. Die Abdichtung mittels Flachdichtung 14 zwischen Gehäusedeckel 4 und Außentopf 7 bewirkt eine zuverlässige Abdichtung auch bei Temperaturschwankungen, die sich unterschiedlich auf die Materialien des Außentopfs 7 und des Innentopf 6 auswirken. Vorzugsweise ist der Innentopf 6 aus einer Nickelbasislegierung gebildet. Dies kann beispielsweise Alloy 718, Inconel 718 bzw. Nicofer 5219 Nb oder Hastelloy C-4 sein. Der Außentopf 7 ist vorzugsweise aus Zirkonoxid (ZrO₂) gebildet. Wie aus Figur 1 weiter ersichtlich, ist der Läufer 10 der Magnetkupplung 10, 11 über eine Pumpenlagerung 12 im Spalttopf 5 gelagert. Die Pumpenlagerung 12 ist mit dem Gehäusedeckel 4 verbunden. Mit der Befestigung der Pumpenlagerung 12 am Gehäusedeckel 4 kann eine besonders kompakte Bauform der hier gezeigten Pumpe realisiert werden, da die Pumpenlagerung 12 innerhalb des doppelschalig ausgeführten Spalttopfs 5 angeordnet ist. Dadurch kann die Pumpenwelle 21, welche die Drehbewegung vom Läufer 10 auf das Laufrad 2 überträgt besonders kurz ausgeführt werden. Diese kompakte Bauform ermöglicht eine mit doppelschaligem Spalttopf 5 ausgerüstete magnetgekuppelten Pumpe 1 so kompakt zu bauen, dass die Chemienorm DIN/ISO 2858 erfüllt wird. Hierdurch eignet sich die gezeigte Pumpe 1 besonders zur Erhöhung der Betriebssicherheit in Produktionsanlagen der Chemieindustrie. Die gezeigte Pumpe 1 kann hier anschlusskompatibel als Ersatz für andere Pumpen, z.B. solche mit einschaligem Spalttopf, verwendet werden. Die Pumpenlagerung 12 ist über eine Schraubverbindung 13 an dem Gehäusedeckel 4 befestigt. Hierdurch lässt sich die Pumpenlagerung 12 sehr einfach montieren. Auch bei Wartungsarbeiten kann die Pumpenlagerung 12 sehr einfach von dem Spalttopf 5 getrennt werden. In Figur 1 ist außerdem gezeigt, dass in dem Gehäusedeckel 4 eine Drucküberwachungsleitung 15 eingelassen ist. Die Drucküberwachungsleitung 15 führt bis in den Zwischenraum 16, der zwischen dem Innentopf 6 und dem Außentopf 7 gebildet ist. Über die in den Zwischenraum 16 geführte Drucküberwachungsleitung 15 kann der im Zwischenraum 16 anliegende Druck überwacht werden. Hierdurch lassen sich Undichtigkeiten oder Beschädigungen des Innentopfs 6 und des Außentopfs 7 einfach feststellen. An der Drucküberwachungsleitung 15 kann zur Drucküberwachung des Zwischenraumes 16 ein Drucksensor 17 angeschlossen sein, der eine automatische Drucküberwachung ermöglicht. Zur Abdichtung der Pumpe 1 ist zwischen dem Gehäusedeckel 4 und dem Pumpengehäuse 3 eine weitere Flachdichtung 18 angeordnet. Durch die Befestigung 19 des Gehäusedeckels 4 wird dieser gegen das Pumpengehäuse 3 gepresst und übt so eine Vorspannung auf die zwischen dem Pumpengehäuse 3 und Gehäusedeckel 4 angeordnete Flachdichtung 18 aus. Hierdurch ist eine zuverlässige Abdichtung des Pumpengehäuses 3 möglich.

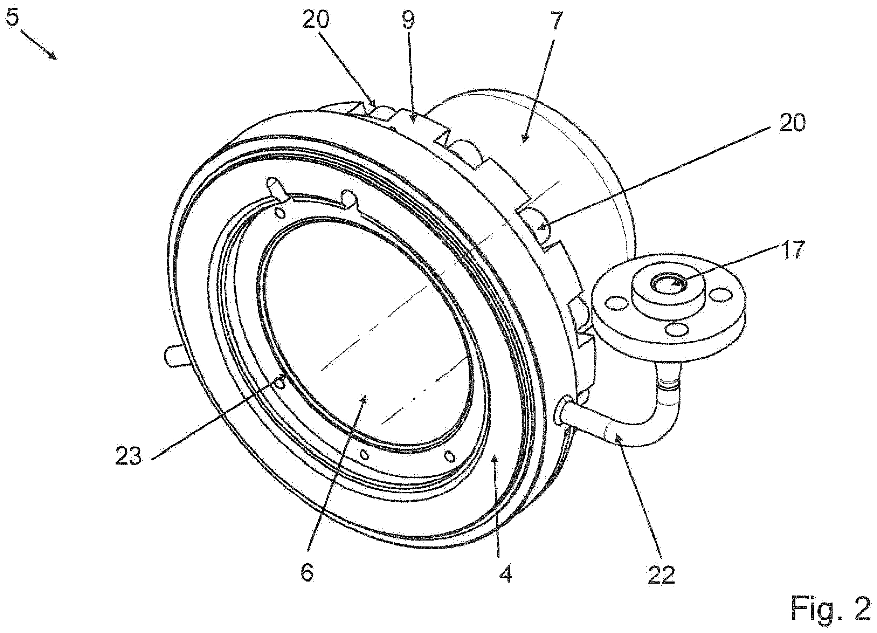

Aus Figur 2 geht der Spalttopf 5 gemäß Figur 1 in einer perspektivischen Ansicht hervor. Zu erkennen ist, dass der Spannring 9 über einen Schraubenkranz 20 die Vorspannung erzeugt, mit welcher der Flansch 8 des Außentopfs 7 gegen den Gehäusedeckel 4 verspannt ist. Seitlich aus dem Gehäusedeckel 4 herausgeführt ist eine Druckübertragungsleitung 22, an welcher ein Drucksensor 17 angeschlossen ist. Die Druckübertragungsleitung 22 ist über eine Drucküberwachungsleitung 15 (Fig. 1), welche in dem Gehäusedeckel 4 gebildet ist, bis in den Zwischenraum 16 zwischen dem Innentopf 6 und dem Außentopf 7 geführt. Hierdurch ist eine Drucküberwachung des Zwischenraumes 16 möglich.

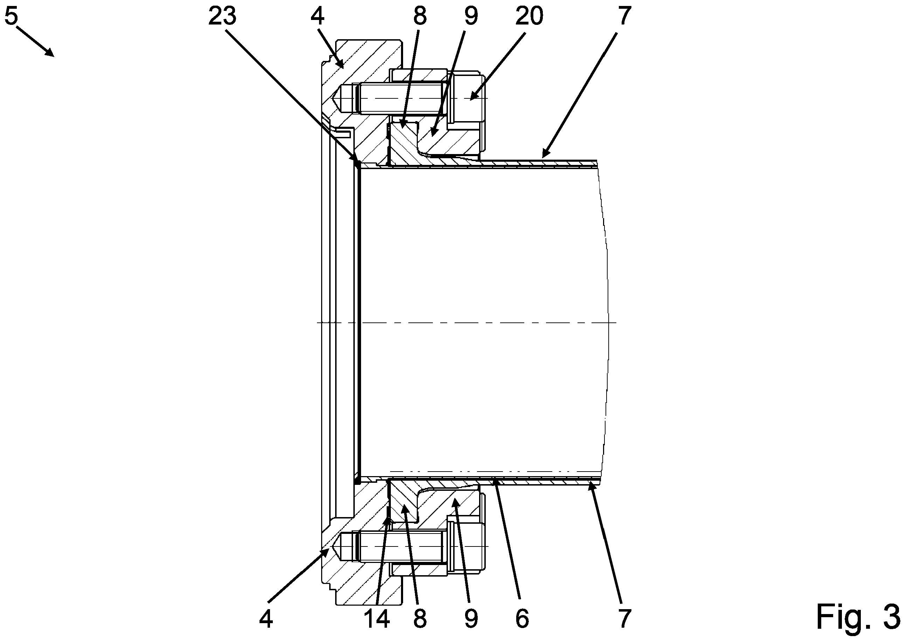

In Figur 3 ist eine Schnittansicht durch den Spalttopf 5 gemäß Figur 2 ausschnittsweise gezeigt. Aus dieser Darstellung ersichtlich ist, dass der Spannring 9 den Flansch 8 des Außentopfes 7 gegen den Gehäusedeckel 4 verspannt, welcher mit dem Innentopf 6 über eine Schweißverbindung 23 verschweißt ist. Der Spannring 9 übt eine Vorspannung auf die zwischen dem Gehäusedeckel 4 und dem Außentopf 7 angeordnete Flachdichtung 14 aus. Die Vorspannung des Spannrings 9 wird über die Schrauben des Schraubenkranzes 20 erzeugt.

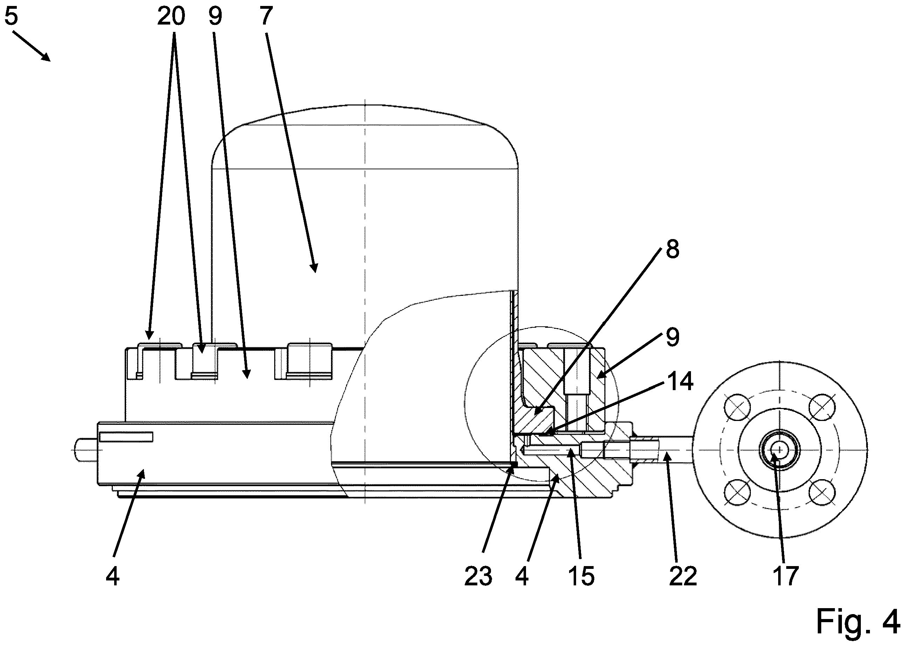

Die Figur 4 zeigt eine weitere Ansicht des Spalttopfes 5. In der Seitenansicht ist ein Teil ausgeschnitten dargestellt, so dass der Blick auf die im Gehäusedeckel 4 gebildete Drucküberwachungsleitung 15 möglich ist.

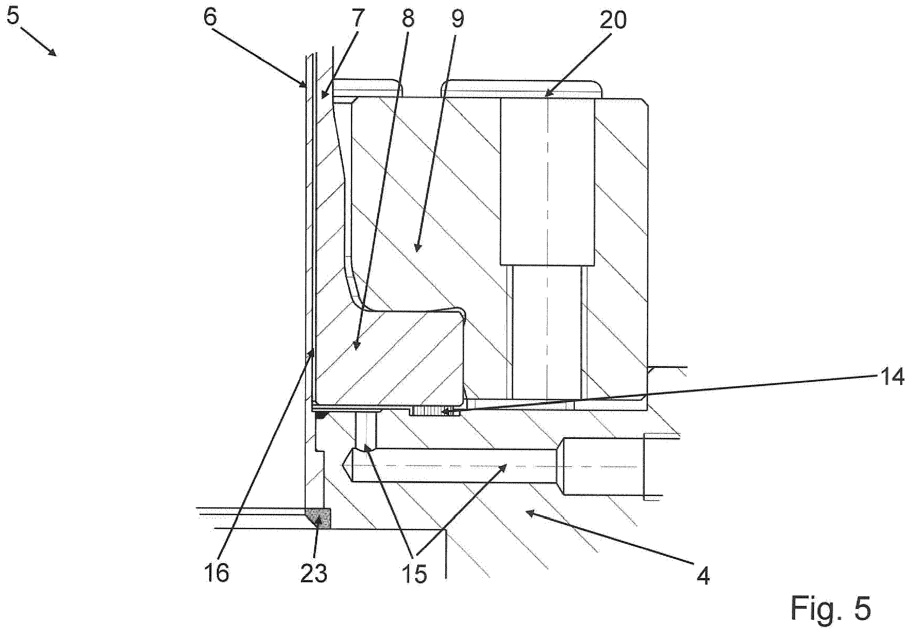

Dieser ausgeschnittene Bereich ist in Figur 5 genauer dargestellt. Zu erkennen ist, wie die Drucküberwachungsleitung 15 in den Zwischenraum 16 zwischen dem Innentopf 6 und dem Außentopf 7 geführt ist. Hierdurch ist eine Drucküberwachung des Zwischenraumes 16 zwischen dem Innentopf 6 und dem Außentopf 7 des Spalttopfs 5 möglich. In dieser Detailansicht auch gut zu erkennen ist die zwischen dem Flansch 8 des Außentopfs 7 und dem Gehäusedeckel 4 angeordnete Flachdichtung 14, auf welche der Spannring 9 durch die Verschraubung über den Schraubenkranz 20 eine Vorspannung ausübt. Auch die Schweißnaht 23 zwischen Innentopf 6 und Gehäusedeckel 4 ist in Figur 5 gut zu erkennen. Hieraus ersichtlich ist, dass die Schweißnaht 23 als Kehlnaht ausgebildet ist und daher einfach zu fertigen ist. Zudem bietet die Kehlnaht eine zuverlässige Abdichtung und Befestigung zwischen dem Gehäusedeckel 4 und dem Innentopf 6.

### Bezuaszeichenliste

- 1: Pumpe
- 2: Laufrad
- 3: Pumpengehäuse
- 4: Gehäusedeckel
- 5: Spalttopf
- 6: Innentopf
- 7: Außentopf
- 8: Flansch
- 9: Spannring
- 10: Treiber
- 11: Läufer
- 12: Pumpenlagerung
- 13: Schraubverbindung
- 14: Erste Flachdichtung
- 15: Drucküberwachungsleitung
- 16: Zwischenraum
- 17: Drucksensor
- 18: Zweite Flachdichtung
- 19: Befestigung
- 20: Schraubenkranz
- 21: Pumpenwelle
- 22: Druckübertragungsleitung
- 23: Schweißverbindung

## Patentansprüche

1. Magnetgekuppelte Pumpe (1) mit
- einem Pumpengehäuse (3),
- einem das Pumpengehäuse (3) verschließenden Gehäusedeckel (4) und
- einem Spalttopf (5), der einen metallischen Innentopf (6) und einen keramischen Außentopf (7), an dem ein Flansch (8) ausgebildet ist, aufweist,
**dadurch gekennzeichnet,**
**dass** der Innentopf (6) mit dem Gehäusedeckel (4) verschweißt ist und der Außentopf (7) über einen Spannring (9) am Flansch (8) gegen den Gehäusedeckel (4) verspannt ist.

2. Pumpe (1) nach Anspruch 1, **dadurch gekennzeichnet, dass** die Pumpe (1) einen Treiber (10) und einen Läufer (11) aufweist, zwischen denen der Spalttopf (5) angeordnet ist, wobei der Läufer (11) über eine Pumpenlagerung (12) im Spalttopf (5) gelagert ist, wobei die Pumpenlagerung (12) am Gehäusedeckel (4) befestigt ist.

3. Pumpe (1) nach Anspruch 2, **dadurch gekennzeichnet, dass** die Pumpenlagerung (12) über eine Schraubverbindung (13) an dem Gehäusedeckel (4) befestigt ist.

4. Pumpe (1) nach einem der Ansprüche 1 bis 3, **dadurch gekennzeichnet, dass** zwischen dem Flansch (8) des Außentopfs (7) und dem Gehäusedeckel (4) eine Flachdichtung (14) angeordnet ist.

5. Pumpe (1) nach Anspruch 4, **dadurch gekennzeichnet, dass** der Spannring (9) auf die Flachdichtung (14) eine Vorspannung ausübt.

6. Pumpe (1) nach einem der Ansprüche 1 bis 5, **dadurch gekennzeichnet, dass** in dem Gehäusedeckel (4) eine Drucküberwachungsleitung (15) ausgebildet ist, die in einen Zwischenraum (16) zwischen dem Innentopf (6) und dem Außentopf (7) führt.

7. Pumpe (1) nach Anspruch 6, **dadurch gekennzeichnet, dass** an die Drucküberwachungsleitung (15) ein Drucksensor (17) zur Drucküberwachung des Zwischenraumes (16) angeschlossen ist.

8. Pumpe (1) nach einem der Ansprüche 1 bis 7, **dadurch gekennzeichnet, dass** der Innentopf (6) aus einer Nickelbasislegierung gebildet ist.

9. Pumpe (1) nach einem der Ansprüche 1 bis 8, **dadurch gekennzeichnet, dass** der Außentopf (7) aus Zirkonoxid gebildet ist.

10. Pumpe (1) nach einem der Ansprüche 1 bis 9, **dadurch gekennzeichnet, dass** zwischen dem Gehäusedeckel (4) und dem Pumpengehäuse (3) eine Flachdichtung (18) angeordnet ist, wobei eine Befestigung (19) des Gehäusedeckels (4) an dem Pumpengehäuse (3) auf die Flachdichtung (18) eine Vorspannung ausübt.

## Claims

1. Magnetically coupled pump (1) with
- a pump housing (3),
- a housing cover (4) which closes the pump housing (3), and
- a split can (5) which has a metallic inner can (6) and a ceramic outer can (7) on which a flange (8) is formed,
**characterised in that**
the inner can (6) is welded to the housing cover (4) and the outer can (7) is braced against the housing cover (4) via a clamping ring (9) on the flange (8).

2. Pump (1) according to claim 1, **characterised in that** the pump (1) has a driver (10) and a rotor (11), between which the split can (5) is arranged, wherein the rotor (11) is mounted in the split can (5) by way of a pump bearing (12), wherein the pump bearing (12) is fastened to the housing cover (4).

3. Pump (1) according to claim 2, **characterised in that** the pump bearing (12) is fastened to the housing cover (4) by way of a screw connection (13).

4. Pump (1) according to one of claims 1 to 3, **characterised in that** a flat seal (14) is arranged between the flange (8) of the outer can (7) and the housing cover (4).

5. Pump (1) according to claim 4, **characterised in that** the clamping ring (9) exerts a prestress on the flat seal (14).

6. Pump (1) according to one of claims 1 to 5, **characterised in that** a pressure monitoring line (15) is formed in the housing cover (4) and runs in a gap (16) between the inner can (6) and the outer can (7).

7. Pump (1) according to claim 6, **characterised in that** a pressure sensor (17) for monitoring the pressure in the gap (16) is connected to the pressure monitoring line (15).

8. Pump (1) according to one of claims 1 to 7, **characterised in that** the inner can (6) is formed from a nickel-based alloy.

9. Pump (1) according to one of claims 1 to 8, **characterised in that** the outer can (7) is formed from zirconium oxide.

10. Pump (1) according to one of claims 1 to 9, **characterised in that** a flat seal (18) is arranged between the housing cover (4) and the pump housing (3), wherein a fastening (19) of the housing cover (4) to the pump housing (3) exerts a prestress on the flat seal (18).

## Revendications

1. Pompe (1) à accouplement magnétique avec
- un carter de pompe (3),
- un couvercle de carter (4) fermant le carter de pompe (3), et
- une chemise d'entrefer (5), qui présente une chemise intérieure (6) métallique et une chemise extérieure (7) céramique, sur laquelle est réalisé un flasque (8),
**caractérisée en ce que**
la chemise intérieure (6) est soudée au couvercle de carter (4) et la chemise extérieure (7) est serrée contre le couvercle de carter (4) sur le flasque (8) par l'intermédiaire d'une bague de serrage (9).

2. Pompe (1) selon la revendication 1, **caractérisée en ce que** la pompe (1) présente un pilote (10) et un induit (11), entre lesquels la chemise d'entrefer (5) est disposée, dans laquelle l'induit (11) est monté dans la chemise d'entrefer (5) par l'intermédiaire d'un support de pompe (12), dans laquelle le support de pompe (12) est fixé sur le couvercle de carter (4).

3. Pompe (1) selon la revendication 2, **caractérisée en ce que** le support de pompe (12) est fixé sur le couvercle de carter (4) par l'intermédiaire d'un raccord vissé (13).

4. Pompe (1) selon l'une quelconque des revendications 1 à 3, **caractérisée en ce qu'**un joint d'étanchéité plat (14) est disposé entre le flasque (8) de la chemise extérieure (7) et le couvercle de carter (4).

5. Pompe (1) selon la revendication 4, **caractérisée en ce que** la bague de serrage (9) exerce une précontrainte sur le joint d'étanchéité plat (14).

6. Pompe (1) selon l'une quelconque des revendications 1 à 5, **caractérisée en ce qu'**est réalisée dans le couvercle de boîtier (4) une conduite de surveillance de pression (15), qui mène dans un espace intermédiaire (16) entre la chemise intérieure (6) et la chemise extérieure (7).

7. Pompe (1) selon la revendication 6, **caractérisée en ce qu'**un capteur de pression (17) pour surveiller la pression de l'espace intermédiaire (16) est raccordé à la conduite de surveillance de pression (15).

8. Pompe (1) selon l'une quelconque des revendications 1 à 7, **caractérisée en ce que** la chemise intérieure (6) est formée à partir d'un alliage à base de nickel.

9. Pompe (1) selon l'une quelconque des revendications 1 à 8, **caractérisée en ce que** la chemise extérieure (7) est formée à partir d'oxyde de zirconium.

10. Pompe (1) selon l'une quelconque des revendications 1 à 9, **caractérisée en ce qu'**un joint d'étanchéité plat (18) est disposé entre le couvercle de carter (4) et le carter de pompe (3), dans laquelle une fixation (19) du couvercle de carter (4) exerce une précontrainte sur le joint d'étanchéité plat (18) sur le carter de pompe (3).
